# EUROPEAN PATENT APPLICATION

(11) **EP 4 597 906 A1**
(43) Date of publication of application: **06.08.2025**
(21) Application number: 25155275.8
(22) Date of filing: 31.01.2025
(51) Int. Cl.: H04L 5/00, H04B 7/06, H04W 8/24, H04W 24/10

(54) **METHOD AND APPARATUS FOR DETERMINING UE CAPABILITY OF SPATIAL AND POWER DOMAIN ADAPTATION**

(30) Priority: 02.02.2024 US 202463549099 P; 31.07.2024 US 202463677633 P; 14.10.2024 US 202463706876 P; 09.01.2025 US 202519014855
(71) Applicant: Samsung Electronics Co., Ltd., Suwon-si, Gyeonggi-do 16677 (KR)
(72) Inventor: BAE, Jung Hyun, San Jose, CA 95134 (US)
(74) Representative: Kuhnen & Wacker Patent- und Rechtsanwaltsbüro PartG mbB

(57) **Abstract**

A system and a method are provided for enhanced beam management framework for spatial and power domain adaptation in NES. A method performed by a terminal in a wireless communication system includes transmitting, to a base station, terminal capability information indicating terminal support of a first capability and a second capability; receiving, from the base station, configuration information based on the terminal capability information, the configuration information including a CSI report configuration; determining a used capability among the first capability and the second capability, based on a characteristic of the CSI report configuration; receiving a CSI-RS based on the configuration information; generating a CSI report in accordance with the used capability based on the received CSI-RS; and transmitting the CSI report to the base station.

## Description

### TECHNICAL FIELD

The disclosure generally relates to spatial and power domain adaptation support. More particularly, the subject matter disclosed herein relates to revolving ambiguity when a user equipment (UE) supports spatial and power domain adaptation according to both 3^{rd} generation partnership project (3GPP) Rel-15 and Rel-18.

### SUMMARY

To support spatial and power domain adaptation, new capabilities of supported total number of channel station information (CSI) reporting settings, supported maximum number of simultaneous non-zero power (NZP)-CSI-reference signal (RS) resources, supported maximum number of total CSI-RS ports in simultaneous NZP-CSI-RS resources have been introduced in 3GPP Rel-18. However, since Rel-15 capabilities also include similar capabilities, interpretation ambiguity can arise when a UE reports support of both Rel-15 capabilities and new capabilities in accordance with Rel-18.

Accordingly, an aspect of the disclosure is to provide methods resolving such ambiguity.

In an embodiment, a method performed by a terminal in a wireless communication system includes transmitting, to a base station, terminal capability information indicating terminal support of a first capability and a second capability; receiving, from the base station, configuration information based on the terminal capability information, the configuration information including a CSI report configuration; determining a used capability among the first capability and the second capability, based on a characteristic of the CSI report configuration; receiving a CSI-RS based on the configuration information; generating a CSI report in accordance with the used capability based on the received CSI-RS; and transmitting the CSI report to the base station.

In an embodiment, a terminal for use in a wireless communication system includes a transceiver; and a processor configured to transmit, to a base station, via the transceiver, terminal capability information indicating terminal support of a first capability and a second capability, receive, from the base station, via the transceiver, configuration information based on the terminal capability information, the configuration information including a CSI report configuration, determine a used capability among the first capability and the second capability, based on a characteristic of the CSI report configuration, receive, via the transceiver, a CSI-RS based on the configuration information, generate a CSI report in accordance with the used capability based on the received CSI-RS, and transmit, via the transceiver, the CSI report to the base station.

In an embodiment, a method performed by a base station in a wireless communication system includes receiving, from a terminal, terminal capability information indicating terminal support of a first capability and a second capability; transmitting, to the terminal, configuration information based on the terminal capability information, wherein the configuration information includes a CSI report configuration, and wherein a characteristic of the CSI report configuration is used by the terminal to identify a used capability among the first capability and the second capability; transmitting a CSI-RS based on the configuration information; and receiving, from the terminal, a CSI report generated in accordance with the used capability based on the transmitted CSI-RS.

In an embodiment, a base station for use in a wireless communication system includes a transceiver; and a processor configured to receive, from a terminal, via the transceiver, terminal capability information indicating terminal support of a first capability and a second capability, transmit, to the terminal, via the transceiver, configuration information based on the terminal capability information, wherein the configuration information includes a CSI report configuration, and wherein a characteristic of the CSI report configuration is used by the terminal to identify a used capability among the first capability and the second capability, transmit, via the transceiver, a CSI-RS based on the configuration information, and receive, from the terminal, via the transceiver, a CSI report generated in accordance with the used capability based on the transmitted CSI-RS.

### BRIEF DESCRIPTION OF THE DRAWING

In the following section, the aspects of the subject matter disclosed herein will be described with reference to exemplary embodiments illustrated in the figures, in which:
FIG. 1 is a signal flow diagram illustrating a CSI report operation according to an embodiment;
FIG. 2 is a flow chart illustrating a method performed by a terminal according to an embodiment;
FIG. 3 is a flow chart illustrating a method performed by a base station according to an embodiment;
FIG. 4 is a block diagram of an electronic device in a network environment, according to an embodiment; and
FIG. 5 shows a system including a UE and a gNB in communication with each other.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

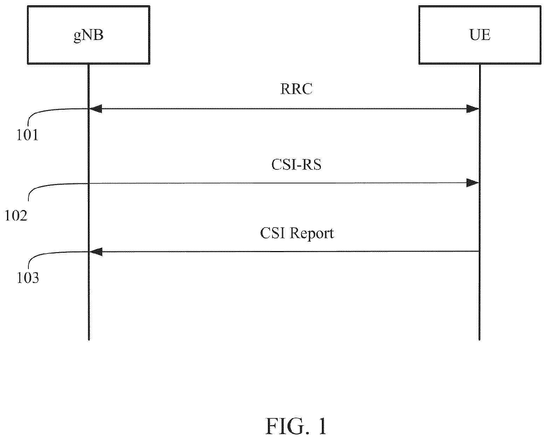

FIG. 1 is a signal flow diagram illustrating a CSI report operation according to an embodiment.

Referring to FIG. 1, in step 101, a base station (i.e., a gNB) and a UE perform a radio resource control (RRC) procedure, during which the UE provides UE capability information to the gNB, and in response, the gNB transmits, to the UE, configuration information for the UE to receive CSI signals, generate CSI reports, and transmit the CSI reports to the gNB. For example, the configuration information may include a CSI resource configuration, a CSI report configuration, etc. As described above, the UE may support both Rel-15 and Rel-18 capabilities and therefore, may indicate that it supports both Rel-15 and Rel-18 capabilities (e.g., as shown in Tables 1 and 2 below), and the gNB generates the CSI report configuration in view of the UE's support of Rel-15 and/or Rel-18 capabilities.

In step 102, the gNB transmits a CSI-RS, which is measured by the UE in accordance with the received configuration information.

In step 103, the UE transmits, to the gNB, a CSI report for the measured CSI-RS in accordance with the CSI report configuration, based on the received CSI-RS.

As described above, to support spatial and power domain adaptation, new capabilities including supported total number of CSI reporting settings, supported maximum number of simultaneous NZP-CSI-RS resources, and supported maximum number of total CSI-RS ports in simultaneous NZP-CSI-RS resources have been introduced in 3GPP Rel-18. However, for these new capabilities, there already exist legacy Rel-15 capabilities as shown in Table 1 below.

More specifically, referring to Table 1, components 4-7 of feature group (FG)2-33 correspond to supported maximum number of simultaneous NZP-CSI-RS resources, and supported maximum number of total CSI-RS ports in simultaneous NZP-CSI-RS resources, and components 1, 3, and 6 of FG2-35 correspond to supported total number of CSI reporting settings.

**Table 1**

| **In de x** | **Featu re group** | **Components** | **Prereq uisite feature groups** | **Field name in TS 38.331** | **Parent IE in TS 38.331** | **Note** | **Mandatory/ Optional** |
|---|---|---|---|---|---|---|---|
| 2-33 | CSI-RS and CSI-IM recept ion for CSI feedb ack | 1) Supported max # of configured NZP-CSI-RS resources per CC, | 2-32 | *csi-RS-IM-ReceptionForFeedba ck* { 1. *maxConfigNumberN ZP-CSI-RS-PerCC* 2. *maxConfigNumberPo rtsAcrossNZP-CSI-RS-PerCC* 3. *maxConfigNumberCS I IM PerCC* 5. *maxNumberSimultan eousNZP-CSI-RS-PerCC* 7. *totalNumberPortsSim ultaneousNZP-CSI-RS-PerCC* } | *MIMO-Parameters PerBandPhy-Parameters FRX-Diff* (for FR1 + FR2 band combinatio n) | All the candidate values are the range of capability signaling which doesn't determin e whether UE is mandator y to support all the signaling values. | Mandatory with capability signaling |
| | | | | | | | Component-1 candidate values: {from 1 to 32} |
| | | 2) Supported max # of ports across all configured NZP-CSI-RS resources per CC | | | | | |
| | | | | | | | Component-2 candidate values: {2, 4, 8, 12, 16, 24, 32, 40, 48 ... ,256} |
| | | 3) Supported max # of configured CSI-IM resources per CC | | | | | |
| | | | | | | | Component-3: candidate values: {1,2,4,8,16,3 2} |
| | | 4) Supported max # simultaneous NZP-CSI-RS resources in active BWPs across all CCs | | | | | |
| | | | | | | | Component-4: candidate values {5, 6, 7, 8, 9, 10, 12, 14, 16, ..., 62, 64} (includes all even numbers between 16 and 64) |
| | | 5) Supported max # simultaneous NZP-CSI-RS resources per CC | | | | | |
| | | | | | | | Component-5: candidate values {1, 2, 3 ... 32} |
| | | 6) Supported max total # of CSI-RS ports in simultaneous NZP-CSI-RS resources in active BWPs across all CCs | | | | | |
| | | | | | | | Component-6: candidate values {8, 16, 24, ..., 248, 256} |
| | | | | | | | Component-7: candidate values {8, 16, 24, ... 128 } |
| | | 7) Supported max total # of CSI-RS ports in simultaneous NZP-CSI-RS resources per CC | | | | | |
| 2-35 | CSI report frame work | 1) Maximum number of periodic CSI report setting per BWP for CSI report | 2-32 | *csi-ReportFramework* { 1. *maxNumberPeriodic CSI-PerBWP-ForCSI-Report* 2. *maxNumberAperiodi cCSI-PerBWP-ForCSI-Report* 3. *maxNumberSemiPers istentCSI-PerBWP-ForCSI-Report* 4. *maxNumberPeriodic CSI-PerBWP-ForBeamReport* 5. *maxNumberAperiodi cCSI-PerBWP-ForBeamReport* 6. *maxNumberAperiodi cCSI-triggeringStatePerC* C 7. *maxNumberSemiPers istentCSI-PerBWP-ForBeamReport 8. simultaneousCSI-ReportsPerCC* } | *MIMO-Parameters PerBandPhy-Parameters FRX-Diff* (for FR1 + FR2 band combinatio n) | Other MIMO capabiliti es than compone nt 5 may further restrict (reduce) the number of simultane ously CSI report that UE is required to update | Mandatory with capability signaling |
| | | | | | | | Component-1 candidate values: {1, 2,3,4} Component-1a candidate values: {1, 2, 3, 4} |
| | | 2) Maximum number of periodic CSI report setting per BWP for beam report | | | | | |
| | | 3) Maximum number of aperiodic CSI report setting per BWP for CSI report | | | | | |
| | | | | | | | Component-2 candidate values {1,2, 3, 4} |
| | | | | | | | Component-2a candidate values {1,2, 3, 4} |
| | | 4) Maximum number of aperiodic CSI report setting per BWP for beam report | | | | | |
| | | | | | | The CSI report in compone nt 4 and 5 includes the beam report and CSI report | |
| | | | | | | | Component-2b candidate values {3, 7, 15, 31, 63, 128} |
| | | 5) Maximum number of configured aperiodic CSI triggering states in *CSI-AperiodicTrigg erStateList* per CC, | | | | | |
| | | | | | | | Component-3 candidate values: {0, 1, 2, 3, 4} |
| | | | | | | Each compone nt is independ ent | Component-3a candidate values: {0, 1, 2, 3, 4} |
| | | 6) Maximum number of semi-persistent CSI report setting per BWP for CSI report | | | | | |
| | | | | | | CSI report setting are counted in the CC indicated by the paramete r carrier in *CSI-Resource Config.* | Component-4 candidate values: {from 1 to 8} |
| | | 7) Maximum number of semi-persistent CSI report setting per BWP for beam report | | | | | |
| | | | | | | | Component-5: candidate values: {from 5 to 32} |
| | | 8) UE can process Y CSI report(s) simultaneously in a CC. CSI reports can be P/SP/A CSI and any latency class and codebook type. | | | | | |
| | | 9) UE can process X CSI report(s) simultaneously across all CCs. CSI reports can be P/SP/A CSI and any latency class and codebook type. | | | | | |

Newly introduced Rel-18 capabilities for supporting spatial and power domain adaptation are shown below in Table 2.

More specifically, in Table 2, components 4-7 of FG42-1, 42-1a, 42-1b, 42-1c, 42-2, and 42-2b and components 3-6 of FG42-2a and 42-2c correspond to supported maximum number of simultaneous NZP-CSI-RS resources, and supported maximum number of total CSI-RS ports in simultaneous NZP-CSI-RS resources. Additionally, component 9 of FG42-1, 42-1a, 42-1b, 42-1c, 42-2, and 42-2b, and component 8 of FG42-2a and 42-2c correspond to supported total number of CSI reporting settings.

**Table 2**

| **Feature s** | **Index** | **Featu re group** | **Components** | **Prer equi site feat ure grou ps** | **Need for the gNB to know if the feature is suppor ted** | **Consequ ence if the feature is not supporte d by the UE** | **Ty pe** | **Note** | **Mandat ory /Option al** |
|---|---|---|---|---|---|---|---|---|---|
| 42. Netw_E nergy_N R | 42-1 | Spatia 1 domai n adapta tion with CSI feedba ck based on CSI report sub-config uratio n(s) for period ic CSI reporti ng | 1. Support of CSI feedback based on CSI report sub-configuration(s), each containing one port subset configuration/list of CSI-RS resource IDs for periodic CSI reporting | FFS | Yes | UE does not support spatial domain adaptatio n for periodicC SI reporting | Per ban d | Component 1 candidate values: {SD-type1, SD-type2, SD-type 1 and2} | Optiona 1 with capabili ty signalin g |
| | | | | | | | | Note: SD-type1 refers to configuration contains one port subset | |
| | | | 2. The max number of sub-configurations Lmax in one CSI report configuration | | | | | | |
| | | | | | | | | Note: SD-type2 refers to configuration contains list of CSI-RS resource IDs | |
| | | | 4. Supported maximum number of simultaneous NZP-CSI-RS resources per CC | | | | | | |
| | | | 5. Supported maximum number of total CSI-RS ports in simultaneous NZP-CSI-RS resources per CC | | | | | Component 2 candidate values: {2,3,4} | |
| | | | 6. Supported maximum number of simultaneous NZP-CSI-RS resources in active BWPs across all CCs | | | | | Component 4 candidate values: SD Type 1: {1, 2, 3 ... 32} SD Type 2: {1, 2, 3 ... 32} | |
| | | | 7. Supported maximum number of total CSI-RS ports in simultaneous NZP-CSI-RS resources in | | | | | | |
| | | | | | | | | Component 5 candidate values: SD Type 1: {8, | |
| | | | active BWPs across all CCs | | | | | 16, 24, ... 128 } SD Type 2: {8, 16, 24, ... 128 } | |
| | | | 8. Support of single-panel type 1 codebook | | | | | | |
| | | | 9. Supported total number of periodic CSI reporting settings without sub-configurations plus the total number of sub-configurations across periodic CSI report settings with sub-configurations per BWP | | | | | | |
| | | | | | | | | Component 6 candidate values: SD Type 1: {5, 6, 7, 8, 9, 10, 12, 14, 16, ..., 62, 64} SD Type 2: {5, 6, 7, 8, 9, 10, 12, 14, 16, ...,62, 64} | |
| | | | | | | | | Component 7 candidate value: SD Type 1: {8, 16,24, ..., 248, 256} SD Type 2: {8, 16, 24, ..., 248, 256} | |
| | | | | | | | | Component 9 candidate values: {2, 3, 4} | |
| | | | | | | | | Note: Components 6 and 7 are signaled per BC | |
| 42. Netw_E nergy_N R | 42-1a | Spatia 1 domai n adapta tion with CSI feedba ck based on CSI report sub-config uratio n(s) for semi-persist ent CSI reporti ng on PUSC H | 1. Support of CSI feedback based on CSI report sub-configuration(s), each containing one port subset configuration/list of CSI-RS resource IDs for semi-persistent CSI reporting on PUSCH | FFS | Yes | UE does not support spatial domain adaptatio n for semi-persistent CSI reporting on PUSCH | Per ban d | Component 1 candidate values: {SD-type1, SD-type2, SD-type 1 and2} | Optiona 1 with capabili ty signalin 9 |
| | | | | | | | | Note: SD-type1 refers to configuration contains one port subset | |
| | | | 2. The max number of sub-configurations Lmax in one CSI report configuration | | | | | | |
| | | | | | | | | Note: SD-type2 refers to configuration contains list of CSI-RS resource IDs | |
| | | | 3. Report of N CSI sub-report(s) included in one SP-CSI report where each CSI sub-report corresponds to one sub-configuration. | | | | | | |
| | | | | | | | | Component 2 candidate values: {2,3,4,5,6,7,8} | |
| | | | 4. Supported maximum number of simultaneous NZP-CSI-RS resources per CC | | | | | | |
| | | | | | | | | Component 3 candidate values: {2,3,4} | |
| | | | 5. Supported maximum number of total CSI-RS ports in simultaneous NZP- | | | | | | |
| | | | | | | | | Component 4 candidate | |
| | | | CSI-RS resources per CC | | | | | values: {1, 2, 3 ... 32} | |
| | | | 6. Supported maximum number of simultaneous NZP-CSI-RS resources in active BWPs across all CCs | | | | | Component 5 candidate values: {8, 16, 24, ... 128} | |
| | | | 7. Supported maximum number of total CSI-RS ports in simultaneous NZP-CSI-RS resources in active BWPs across all CCs | | | | | Component 6 candidate values: {5, 6, 7, 8, 9, 10, 12, 14, 16, ..., 62, 64} | |
| | | | 8. Support of single-panel type 1 codebook | | | | | Component 7 candidate values: {8, 16, 24, ..., 248, 256} | |
| | | | 9. Supported total number of semi-persistent CSI reporting settings without sub-configurations plus the total number of sub-configurations across semi-persistent CSI report settings with sub-configurations per BWP | | | | | | |
| | | | | | | | | Component 9 candidate values: {2, 3, 4, 5, 6, 7, 8, 9, 10, 11, 12} | |
| | | | | | | | | Note: Components 6 and 7 are signaled per BC | |
| 42. Netw_E nergy_N R | 42-1c | Spatia 1 domai n adapta tion with CSI feedba ck based on CSI report sub-config uratio n(s) for semi-persist ent CSI reporti ng on PUCC H | 1. Support of CSI feedback based on CSI report sub-configuration(s), each containing one port subset configuration/list of CSI-RS resource IDs for semi-persistent CSI reporting on PUCCH | FFS | Yes | UE does not support spatial domain adaptatio n for semi-persistent CSI reporting on PUCCH | Per ban d | Component 1 candidate values: {SD-type1, SD-type2, SD-type 1 and2} | Optiona 1 with capabili ty signalin g |
| | | | | | | | | Note: SD-type1 refers to configuration contains one port subset | |
| | | | 2. The max number of sub-configurations Lmax in one CSI report configuration | | | | | | |
| | | | | | | | | Note: SD-type2 refers to configuration contains list of CSI-RS resource IDs Component 2 candidate values: {2,3,4} | |
| | | | 3. Report of N CSI sub-report(s) included in one SP-CSI report where each CSI sub-report corresponds to one sub-configuration. | | | | | | |
| | | | 4. Supported maximum number of simultaneous NZP-CSI-RS resources per CC | | | | | | |
| | | | | | | | | Component 3 candidate values: {2,3,4} | |
| | | | 5. Supported maximum number of total CSI-RS ports in simultaneous NZP-CSI-RS resources per CC | | | | | | |
| | | | | | | | | Component 4 candidate values: {1, 2, 3...32} | |
| | | | 6. Supported maximum number of simultaneous NZP-CSI-RS resources in active BWPs across all CCs | | | | | Component 5 candidate values: {8, 16, 24, ... 128} | |
| | | | 7. Supported maximum number of total CSI-RS ports in simultaneous NZP-CSI-RS resources in active BWPs across all CCs | | | | | Component 6 candidate values: {5, 6, 7, 8, 9, 10, 12, 14, 16, ..., 62, 64} | |
| | | | 8. Support of single-panel type 1 codebook | | | | | Component 7 candidate values: {8, 16, 24, ..., 248, 256} | |
| | | | 9. Supported total number of semi-persistent CSI reporting settings without sub-configurations plus the total number of sub-configurations across semi-persistent CSI report settings with sub-configurations per BWP | | | | | | |
| | | | | | | | | Component 9 candidate values: {2, 3, 4} | |
| | | | | | | | | Note: Components 6 and 7 are signaled per BC | |
| 42. Netw_E nergy_N R | 42-1b | Spatia 1 domai n adapta tion with CSI feedba ck based on CSI report sub-config uratio n(s) for aperio die CSI reporti ng | 1. Support of CSI feedback based on CSI report sub-configuration(s), each containing one port subset configuration/list of CSI-RS resource IDs for aperiodic CSI reporting | FFS | Yes | UE does not support spatial domain adaptatio n for aperiodic CSI reporting | Per ban d | Component 1 candidate values: {SD-type1, SD-type2, SD-type 1 and2} | Optiona 1 with capabili ty signalin g |
| | | | | | | | | Note: SD-type1 refers to configuration contains one port subset | |
| | | | 2. The max number of sub-configurations Lmax in one CSI report configuration | | | | | | |
| | | | | | | | | Note: SD-type2 refers to configuration contains list of CSI-RS resource IDs | |
| | | | 3. Report of N CSI sub-report(s) included in one CSI report where each CSI sub-report corresponds to one sub-configuration | | | | | | |
| | | | 4. Supported maximum number of simultaneous NZP-CSI-RS resources per CC | | | | | Component 2 candidate values: {2,3,4,5,6,7,8} | |
| | | | 5. Supported maximum number of total CSI-RS ports in simultaneous NZP-CSI-RS resources per CC | | | | | Component 3 candidate values {2,3,4} | |
| | | | | | | | | Component 4 candidate values: SD Type 1: {1, 2, 3 ... 32} SD Type 2: {1, 2, 3 ... 32} | |
| | | | 6. Supported maximum number of simultaneous NZP-CSI-RS resources in active BWPs across all CCs | | | | | | |
| | | | 7. Supported maximum number of total CSI-RS ports in simultaneous NZP-CSI-RS resources in active BWPs across all CCs | | | | | Component 5 candidate values: SD Type 1: {8, 16, 24, ... 128 } SD Type 2: {8, 16, 24, ... 128 } | |
| | | | 8. Support of single-panel type 1 codebook | | | | | | |
| | | | 9. Supported total number of aperiodic | | | | | | |
| | | | CSI reporting settings without sub-configurations plus the total number of sub-configurations across aperiodic CSI report settings with sub-configurations per BWP | | | | | Component 6 candidate values: SD Type 1: {5, 6, 7, 8, 9, 10, 12, 14, 16, ...,62, 64} SD Type 2: {5, 6, 7, 8, 9, 10, 12, 14, 16, ...,62, 64} | |
| | | | | | | | | Component 7 candidate values: SD Type 1: {8, 16, 24, ..., 248, 256} SD Type 2: {8, 16, 24, ..., 248, 256} | |
| | | | | | | | | Note: Components 6 and 7 are signaled per BC | |
| | | | | | | | | Component 9 candidate values: {2, 3, 4, 5, 6, 7, 8, 9, 10, 11,12} | |
| 42. Netw_E nergy_N R | 42-2 | Power domai n adapta tion with CSI feedba ck based on CSI report sub-config uratio n(s) for period ic CSI reporti ng | 1. Support of CSI feedback based on CSI report sub-configuration(s), each containing one power offset for aperiodic CSI reporting | FFS | Yes | UE does not support power domain adaptatio n for periodicC SI reporting | Per ban d | Component 2 candidate value: {2,3,4} | Optiona 1 with capabili ty signalin g |
| | | | | | | | | Component 4 candidate value: {1,2, 3 ... 32} | |
| | | | 2. The max number of sub-configurations Lmax in one CSI report configuration | | | | | | |
| | | | | | | | | Component 5 candidate value: {8, 16, 24, ... 128 } | |
| | | | 4. Supported maximum number of simultaneous NZP-CSI-RS resources per CC | | | | | | |
| | | | | | | | | Component 6 candidate value: {5, 6, 7, 8, 9, 10, 12, 14, 16, ..., 62, 64} | |
| | | | 5. Supported maximum number of total CSI-RS ports in simultaneous NZP-CSI-RS resources per CC | | | | | | |
| | | | | | | | | Component 7 candidate value: {8, 16, 24, ..., 248, 256} | |
| | | | 6. Supported maximum number of simultaneous NZP-CSI-RS resources in active BWPs across all CCs | | | | | | |
| | | | | | | | | Note: Components 6 and 7 are signaled per BC | |
| | | | 7. Supported maximum number of total CSI-RS ports in simultaneous NZP-CSI-RS resources in active BWPs across all CCs | | | | | | |
| | | | | | | | | Component 9 candidate values: {2, 3, 4} | |
| | | | 8. Support of single-panel type 1 codebook | | | | | | |
| | | | 9. Supported total number of periodic CSI reporting settings without sub-configurations plus the total number of sub-configurations across periodic CSI report settings with sub-configurations per BWP | | | | | | |
| 42. Netw_E nergy_N R | 42-2a | Power domai n adapta tion with CSI feedba ck based on CSI report sub-config uratio n(s) for semi-persist ent CSI reporti ng on PUSC H | Support of CSI feedback based on CSI report sub-configuration(s), each containing one power offset for semi-persistent CSI reporting | FFS | Yes | UE does not support power domain adaptatio n for semi-persistent CSI reporting on PUSCH | Per ban d | Component 1 candidate values: {2,3,4,5,6,7,8} | Optiona 1 with capabili ty signalin g |
| | | | | | | | | Component 2 candidate values: {2,3,4} | |
| | | | 1. The max number of sub-configurations Lmax in one CSI report configuration on PUSCH | | | | | | |
| | | | | | | | | Component 3 candidate values: {1,2, 3 ... 32} | |
| | | | 2. Report of N CSI sub-report(s) included in one SP-CSI report where each CSI sub-report corresponds to one sub-configuration. | | | | | | |
| | | | | | | | | Component 4 candidate values: {8, 16, 24, ... 128 } | |
| | | | 3. Supported maximum number of simultaneous NZP-CSI-RS resources per CC | | | | | Component 5 candidate values: {5, 6, 7, 8, 9, 10, 12, 14, 16, ..., 62, 64} | |
| | | | 4. Supported maximum number of total CSI-RS ports in simultaneous NZP-CSI-RS resources per CC | | | | | | |
| | | | | | | | | Component 6 candidate values: {8, 16, 24, ..., 248, 256} | |
| | | | 5. Supported maximum number of simultaneous NZP-CSI-RS resources in active BWPs across all CCs | | | | | | |
| | | | | | | | | Component 8 candidate values: {2, 3, 4,5,6,7,8,9,10, 11,12} Note: Components 5 and 6 are signaled per BC | |
| | | | 6. Supported maximum number of total CSI-RS ports in simultaneous NZP-CSI-RS resources in active BWPs across all CCs | | | | | | |
| | | | 7. Support of single-panel type 1 codebook | | | | | | |
| | | | 8. Supported total number of semi-persistent CSI reporting settings without sub-configurations plus the total number of sub-configurations across semi-persistent CSI report settings with sub-configurations per BWP | | | | | | |
| 42. Netw_E nergy_N R | 42-2c | Power domai n adapta tion with CSI feedba ck based on CSI report sub-config uratio n(s) for semi-persist ent CSI reporti ng on PUCC H | Support of CSI feedback based on CSI report sub-configuration(s), each containing one power offset for semi-persistent CSI reporting on PUCCH | FFS | Yes | UE does not support power domain adaptatio n for semi-persistent CSI reporting on PUCCH | Per ban d | Component 1 candidate values: {2,3,4} | Optiona 1 with capabili ty signalin g |
| | | | | | | | | Component 2 candidate values: {2,3,4} | |
| | | | 1. The max number of sub-configurations Lmax in one CSI report configuration | | | | | | |
| | | | | | | | | Component 3 candidate values: {1, 2, 3 ... 32} | |
| | | | 2. Report of N CSI sub-report(s) included in one SP-CSI report where each CSI sub-report corresponds to one sub-configuration. | | | | | | |
| | | | | | | | | Component 4 candidate values: {8, 16, 24, ... 128} | |
| | | | 3. Supported maximum number of simultaneous NZP-CSI-RS resources per CC | | | | | Component 5 candidate values: {5, 6, 7, 8, 9, 10, 12, 14, 16, ..., 62, 64} | |
| | | | 4. Supported maximum number of total CSI-RS ports in simultaneous NZP-CSI-RS resources per CC | | | | | | |
| | | | | | | | | Component 6 candidate values: {8, 16, 24, ..., 248, 256} | |
| | | | 5. Supported maximum number of simultaneous NZP-CSI-RS resources in active BWPs across all CCs | | | | | | |
| | | | | | | | | Component 8 candidate values: {2, 3, 4} | |
| | | | 6. Supported maximum number of total CSI-RS ports in simultaneous NZP-CSI-RS resources in active BWPs across all CCs | | | | | | |
| | | | | | | | | Note: Components 5 and 6 are signaled per BC. | |
| | | | 7. Support of single-panel type 1 codebook | | | | | | |
| | | | 8. Supported total number of semi-persistent CSI reporting settings without sub-configurations plus the total number of sub-configurations across semi-persistent CSI report settings with sub-configurations per BWP | | | | | | |
| 42. Netw_E nergy_N R | 42-2b | Power domai n adapta tion with CSI feedba ck based on CSI report | 1. Support of CSI feedback based on CSI report sub-configuration(s), each containing one power offset for aperiodic CSI reporting | FFS | Yes | UE does not support power domain adaptatio n for aperiodic CSI reporting | Per ban d | Component 2 candidate values: {2,3,4,5,6,7,8} | Optiona 1 with capabili ty signalin g |
| | | | | | | | | Component 3 candidate values: {2,3,4} | |
| | | | 2. The max number of sub-configurations Lmax in one CSI report configuration | | | | | | |
| | | | | | | | | Component 4 candidate | |
| | | | 3. Report of N CSI sub-report(s) included | | | | | | |
| | | sub-config uratio n(s) for aperio die CSI reporti ng | in one CSI report where each CSI sub-report corresponds to one sub-configuration | | | | | values: {1, 2, 3 ... 32} | |
| | | | | | | | | Component 5 candidate values: {8, 16, 24, ... 128 } | |
| | | | 4. Supported maximum number of simultaneous NZP-CSI-RS resources per CC | | | | | | |
| | | | | | | | | Component 6 candidate values: {5, 6, 7, 8, 9, 10, 12, 14, 16, ..., 62, 64} | |
| | | | 5. Supported maximum number of total CSI-RS ports in simultaneous NZP-CSI-RS resources per CC | | | | | | |
| | | | 6. Supported maximum number of simultaneous NZP-CSI-RS resources in active BWPs across all CCs | | | | | Component 7 candidate values: {8, 16, 24, ..., 248, 256} | |
| | | | 7. Supported maximum number of total CSI-RS ports in simultaneous NZP-CSI-RS resources in active BWPs across all CCs | | | | | Component 9 candidate values: {2, 3, 4, 5, 6, 7, 8, 9, 10, 11, 12} | |
| | | | | | | | | Note: Components 6 and 7 are signaled per BC | |
| | | | 8. Support of single-panel type 1 codebook | | | | | | |
| | | | 9. Supported total number of aperiodic CSI reporting settings without sub-configurations plus the total number of sub-configurations across aperiodic CSI report settings with sub-configurations per BWP | | | | | | |

As indicated above, the simultaneous existence of both Rel-15 and Rel-18 capabilities for the same functionalities like those shown above may create interpretation ambiguity if a UE reports both Rel-15 and Rel-18 capabilities. Accordingly, an aspect of the present disclosure is to remove such ambiguity. More specifically, a mechanism is provided to determine which capability is to be used.

According to an embodiment, a value reported in new Rel-18 capability is used instead of the value reported in legacy Rel-15 capability for BWP when a CSI report configuration in a bandwidth part (BWP) includes at least one CSI report setting with sub-configuration.

For example, considering components 4-5 of FG42-1, 42-1a, 42-1b, 42-1c, 42-2, and 42-2b in Table 2, a value reported in component 4 or 5 may be used for a component carrier (CC) when a CSI report configuration in an active BWP of the CC includes the corresponding rel-18 reporting configuration.

As another example, considering component 9 of FG42-1, 42-1a, 42-1b, 42-1c, 42-2, and 42-2b in Table 2, a value reported in component 9 may be used instead of a value reported in FG2-35 for a BWP, when a CSI report configuration in the BWP includes the corresponding rel-18 reporting configuration.

This mechanism works effectively when a corresponding capability provides per-CC values, such as components 4 and 5 of FG42-1, 42-1a, 42-1b, 42-1c, 42-2, and 42-2b, components 3 and 4 of 42-2a and 42-2c, component 9 of FG42-1, 42-1a, 42-1b, 42-1c, 42-2, and 42-2b, and component 8 of 42-2a and 42-2c.

When a corresponding capability provides 'all CC' values like components 6 and 7 of FG42-1, 42-1a, 42-1b, 42-1c, 42-2, and 42-2b, and components 5 and 6 of 42-2a and 42-2c, a value reported in new Rel-18 capability is used instead of a value reported in legacy Rel-15 capability, when a CSI report configuration in an active BWP of any CC includes at least one CSI report setting with sub-configuration.

For example, considering components 6 and 7 of FG42-1, 42-1a, 42-1b, 42-1c, 42-2, and 42-2b in Table 2, a value reported in component 6 or 7 is used when the CSI report configuration in the active BWP of any CC includes the corresponding rel-18 reporting configuration.

Aforementioned mechanisms can also be expressed, as shown below, by using the names of RRC capability signaling, e.g., *maxNumberSimultaneousNZP-CSI-RS-PerCC, maxNumberCSI-ResourcePerCC-r18,* etc.

More specifically, the UE may indicates a number of supported simultaneous NZP-CSI-RS resources with parameter *maxNumberSimultaneousNZP-CSI-RS-PerCC* or *maxNumberCSI-ResourcePerCC-r18* in a CC, and *maxNumberSimultaneousNZP-CSI-RS-ActBWP-AllCC* or *maxNumberCSI-ResourceAcrossCC-r18* in active BWPs across all component carriers. If the UE is configured with at least one CSI report setting with a sub-configuration in the CC, the UE shall use *maxNumberCSI-ResourcePerCC-r18*; otherwise, the UE shall use *maxNumberSimultaneousNZP-CSI-RS-PerCC.*

If the UE is configured with at least one CSI reporting setting with a sub-configuration in any component carrier, the UE shall use *maxNumberCSI-ResourceAcrossCC-r18;* otherwise, UE shall use *maxNumberSimultaneousNZP-CSI-RS-ActBWP-AllCC.*

The UE indicates a supported total number of ports in simultaneous NZP-CSI-RS resources with a parameter *totalNumberPortsSimultaneousNZP-CSI-RS-PerCC* or *maxNumberTotalCSI-ResourcePerCC-r18* in a CC, and *totalNumberPortsSimultaneousNZP-CSI-RS-ActBWP-AllCC* or *maxNumberPortsAcrossCC-r18* in active BWPs across all component carriers.

If the UE is configured with at least one CSI report setting with a sub-configuration in the CC, the UE shall use *maxNumberTotalCSI-ResourcePerCC-r18*; otherwise, UE shall use *totalNumberPortsSimultaneousNZP-CSI-RS-PerCC.*

If UE is configured with at least one CSI reporting setting with a sub-configuration in any CC, the UE shall use *maxNumberPortsAcrossCC-r18;* otherwise, the UE shall use *totalNumberPortsSimultaneousNZP-CSI-RS-ActBWP-AllCC.*

The UE indicates a number of supported periodic CSI report setting per BWP with a parameter *maxNumberPeriodicCSI-PerBWP-ForCSI-Report* or *totalNumberCSI-Reporting-r18.* If the UE is configured with at least one CSI report setting with a sub-configuration in a BWP in a serving cell, the UE shall use *totalNumberCSI-Reporting-r18* for the BWP; otherwise, UE shall use *maxNumberPeriodicCSI-PerBWP-ForCSI-Report* for the BWP.

The UE indicates a number of supported aperiodic CSI report setting per BWP with a parameter *maxNumberAperiodicCSI-PerBWP-ForCSI-Report* or *totalNumberCSI-Reporting-r18.* If the UE is configured with at least one CSI report setting with a sub-configuration in a BWP in a serving cell, the UE shall use *totalNumberCSI-Reporting-r18* for the BWP; otherwise, the UE shall use *maxNumberAperiodicCSI-PerBWP-ForCSI-Report* for the BWP.

The UE indicates a number of supported semi-persistent CSI report setting per BWP with a parameter *maxNumberSemiPersistentCSI-PerBWP-ForCSI-Report* or *totalNumberCSI-Reporting-r18.* If the UE is configured with at least one CSI report setting with a sub-configuration in a BWP in a serving cell, the UE shall use *totalNumberCSI-Reporting-r18* for the BWP; otherwise, the UE shall use *maxNumberSemiPersistentCSI-PerBWP-ForCSI-Report* for the BWP.

According to an embodiment, another aspect to consider is how a total limit for both Rel-15 and Rel-18 CSI configurations is determined.

In one method, both values in Rel-15 and Rel-18 capabilities are used. For example, components 4-7 of FG2-33 only count CSI-RS resources that are not associated with spatial or power domain adaptations. However, this may create an unnecessary division issue, which may also result in under-reporting in FG2-33. For example, if the UE can support the total value N across Rel-15 and Rel-18 configurations, then the UE may divide N into 2 numbers such that N1+N2=N and signal N1 in FG2-33 and N2 for Rel-18 FGs. However, this may not be ideal if the UE plans to mostly 'reuse' existing total capability to support Rel-18.

For example, assuming that the UE supports value 10 in FG2-33, and considers upgrading total capability to 13 in Rel-18, unless the capability signaling interpretation allows sharing of the total capability 13 for Rel-15 or Rel-18 configurations, the UE would need to apply division between Rel-15 and Rel-18. If the UE determines (or estimates) that the Rel-18 configuration would require more resources, then it may signal 10 for a Rel-18 part and 3 for FG2-33. However, this then would negatively affect legacy operation and legacy gNBs.

Hence, there is also a need for an alternative mechanism in which new Rel-18 capabilities for supported maximum number of simultaneous NZP-CSI-RS resources, and supported maximum number of total CSI-RS ports in simultaneous NZP-CSI-RS resources provide the total limit of reporting settings with and without sub-configurations. In other words, an NZP-CSI-RS resource and CSI-RS ports may be counted for reporting settings with and without sub-configurations.

Another aspect to consider is how a total limit of the number of simultaneous NZP-CSI-RS resources, and the number of total CSI-RS ports in simultaneous NZP-CSI-RS resources are determined, including type-1 and type-2 Rel-18 CSI configurations, e.g., components 4-7 in FGs 42-1 and 42-1b.

Similar to the aforementioned issue with Rel-15 and Rel-18 capabilities, the total limit being determined separately for type-1 and type-2 may not be desirable since it prohibits sharing of total capability. To address this type of issue, according to an embodiment, the total limit across type-1 and type-2 may be provided as three alternatives (Alt1, Alt2, and Alt3) below.

Alt1: If a UE reports both type 1 and type 2 for components 4-7 in both FGs 42-1 or 42-1b and if the UE is configured with CSI report settings with sub-configurations corresponding to both type 1 and type 2, then the supported total number of NZP-CSI-RS resources/ports may be determined by the minimum of the reported values for both type 1 and type 2.

Alt2: If a UE does not report only type 1 or only type 2 for components 4-7 in both FGs 42-1 and 42-1b, and if the UE is configured with CSI report settings with sub-configurations corresponding to both type 1 and type 2, then the supported total number of NZP-CSI-RS resources/ports may be determined by the minimum of the reported values for both type 1 and type 2.

Alt3: For components 4-7 in FGs 42-1 and 42-1b, if a UE reports both type 1 and type 2 in FGs 42-1 or 42-1b, if the UE reports only type 1 in FG 42-1 and only type 2 in FG-42-1b, or if the UE reports only type 2 in FG 42-1 and only type 1 in FG-42-1b, and if the UE is configured with CSI report settings with sub-configurations corresponding to both type 1 and type 2, then the supported total number of NZP-CSI-RS resources/ports may be determined by the minimum of the reported values for both type 1 and type 2.

While Alt1 above has the simplest and most straightforward condition of 'If a UE reports both type 1 and type 2 for components 4-7 in FGs 42-1 or 42-1b', it may not cover a case when a UE reports only type 1 for FG42-1 and only type 2 for FG42-1b while the minimum of those two reported values should still be used as the total value.

Alt2 above resolves this issue by the modified condition of 'If a UE does not report only type 1 or only type 2 for components 4-7 in both FGs 42-1 and 42-1b'.

Alt3 is somewhat equivalent to Alt2 while only using positive tense to potentially improve clarity.

Another thing to consider is the effect of two values reported in FG42-1 and 42-2 (or in FG42-1b and 42-2b) for the maximum number of reporting settings including legacy configurations. For example, if a UE signals different values in FG42-1 and 42-2, and if both power and spatial domain adaptation is configured in a BWP, it is not clear which value is a total number including legacy. If N1 = the number of sub-configs with spatial domain adaptation, N2 = the number of sub-configs with power domain adaptation, and N3 = the number of legacy configurations, considering that a UE signals N4 in FG42-1 and N5 in FG42-2, then the interpretation may be N1, N2, and N3 should satisfy N1+N3<=N4, and N2+N3<=N5. In this case, it may be beneficial to explicitly reflect this relationship in each component.

According to another embodiment of the disclosure, component 9 of FG42-1, 42-1b, 42-2, and 42-2b may be updated as shown in Table 3 below. In Table 3, the bolded and underlined text illustrates the updated text.

**Table 3**

| |
|---|
| 42-1: Supported total number of periodic CSI reporting settings without sub-configurations plus the total number of sub-configurations across periodic CSI report settings with sub-configurations **for spatial domain adaptation** per BWP |
| 42-1b: Supported total number of aperiodic CSI reporting settings without sub-configurations plus the total number of sub-configurations across CSI report settings with sub-configurations **for spatial domain adaptation** per BWP |
| 42-2: Supported total number of periodic CSI reporting settings without sub-configurations plus the total number of sub-configurations across periodic CSI report settings with sub-configurations **for power domain adaptation** per BWP |
| 42-2b: Supported total number of aperiodic CSI reporting settings without sub-configurations plus the total number of sub-configurations across aperiodic CSI report settings with sub-configurations **for power domain adaptation** per BWP |

In the scheme above, the number of legacy configurations is counted twice towards both N4 and N5, which can be inefficient. Therefore, as an alternative, the number of legacy configurations N3 may be divided into two numbers, e.g., N3/2 and N3/2, to be counted towards N4 and N5, or N3 may be counted only towards one of N4 and N5, which is equivalent to dividing N3 into two number of N3 and 0.

Another aspect to consider is when spatial and power domain adaptation is jointly configured. According to an embodiment, one method is to create a new component corresponding to a joint operation, such that a UE can separately report the supported total number for the joint operation only. An example of such a component is provided in Table 4 below

**Table 4**

| |
|---|
| Supported total number of periodic CSI reporting settings without sub-configurations plus the total number of sub-configurations across periodic CSI report settings with sub-configurations for joint spatial and power domain adaptation per BWP. Supported total number of aperiodic CSI reporting settings without sub-configurations plus the total number of sub-configurations across CSI report settings with sub-configurations for joint spatial and power domain adaptation per BWP. |

According to another embodiment, a new component is not created and existing total values may be reused. For example, if N1 = the number of sub-configs with spatial domain adaptation, N2 = the number of sub-configs with power domain adaptation, N3 = the number of legacy configurations, and N6 = the number of sub-configs with joint spatial and power domain adaptation., considering that a UE signals N4 in FG42-1 and N5 in FG42-2, then the interpretation may be that N1, N2, N3, and N6 should satisfy N1+N3+N6<=N4, and N2+N3+N6<=N5. In this case, it may be beneficial to explicitly reflect this relationship in each component.

According to another embodiment of the disclosure, component 9 of FG42-1, 42-1b, 42-2, and 42-2b may be updated as shown in Table 5 below. In Table 5, the bolded and underlined text illustrates the updated text.

**Table 5**

| |
|---|
| 42-1: Supported total number of periodic CSI reporting settings without sub-configurations plus the total number of sub-configurations across periodic CSI report settings with sub-configurations **for spatial domain or joint spatial and power domain adaptation** per BWP |
| 42-1b: Supported total number of aperiodic CSI reporting settings without sub-configurations plus the total number of sub-configurations across CSI report settings with sub-configurations **for spatial domain or joint spatial and power domain adaptation** per BWP |
| 42-2: Supported total number of periodic CSI reporting settings without sub-configurations plus the total number of sub-configurations across periodic CSI report settings with sub-configurations **for power domain or joint spatial and power domain adaptation** per BWP |
| 42-2b: Supported total number of aperiodic CSI reporting settings without sub-configurations plus the total number of sub-configurations across aperiodic CSI report settings with sub-configurations **for power domain or joint spatial and power domain** **adaptation** per BWP |

In the scheme above, the number of joint configurations is counted twice towards both N4 and N5, but this can be inefficient. As alternative, the number of joint configurations N6 may be divided into two numbers, e.g., N6/2 and N6/2, to be counted towards N4 and N5, or N6 may be counted only towards one of N4 and N5, which is equivalent to dividing N6 into two number of N6 and 0.

Another aspect to consider is the number of CSI-RS resources.

FG42-1, 42-1a, 42-1b, 42-2, 42-2a, and 42-2b have 4 common components (i.e., components 4-7), as shown in Table 6, which related to components 4-7 of FG2-33.

**Table 6**

| |
|---|
| Supported max # simultaneous NZP-CSI-RS resources per CC. |
| Supported max total # of CSI-RS ports in simultaneous NZP-CSI-RS resources per CC. |
| Supported max # simultaneous NZP-CSI-RS resources in active BWPs across all CCs. |
| Supported max total # of CSI-RS ports in simultaneous NZP-CSI-RS resources in active BWPs across all CCs. |

Similar to component 9 in FG42-1, 42-1b, 42-2, and 42-2b, components 4-7 in FG42-1, 42-1a, 42-1b, 42-2, 42-2a, and 42-2b relate to a UE declaring separate values for each of periodic, semi-persistent, and aperiodic reporting, i.e., a first embodiment. This is different from the principle of FG2-33 in which the UE declares one value in total, regardless of periodic, semi-persistent, or aperiodic reporting. This may have a drawback, however, especially if the UE prefers the total limit rather than per reporting type limit. For example, if the UE has a total limit of N, and if the UE supports periodic, semi-persistent, and aperiodic reporting, then the UE may divide N into 3 numbers such that N1+N2+N3=N and signal each value for each FG. If the UE signals N for all FGs, then it can be interpreted the UE supports 3N in total. Accordingly, this creates unnecessary division of numbers, which would also affect gNB flexibility. A similar issue may happen between FG42-1s and FG42-2s, i.e., across spatial and power domain adaptation.

According to a second embodiment, a value reported in FG41-1s and FG41-2s provides the total value across all reporting types and adaptation methods the UE supports, and the UE is should signal the same value in FG41-1s and FG41-2s.

How CSI-RS resources are counted considering both Rel-15 and Rel-18 reporting settings when Rel-18 values are used may depend on the two embodiments above. For example, using the second embodiment, then Rel-18 values would be for total number of CSI-RS resources associated with legacy or Rel-18 CSI reporting settings.

Using the first embodiment, a similar framework as component 9 of FG42-1, 42-1b, 42-2, and 42-2b can be used. For example, if N1 = the number of CSI-RS resources associated with spatial domain adaptation periodic reporting, N2 = the number of CSI-RS resources associated with power domain adaptation periodic reporting, and N3 =he number of CSI-RS resources associated with legacy periodic reporting, considering the UE signals N4 in FG42-1 and N5 in FG42-2, then the interpretation may be that N1, N2, and N3 should satisfy N1+N3<=N4, and N2+N3<=N5. Here, the number of legacy configurations is counted twice towards both N4 and N5, which can be inefficient. Therefore, as an alternative, the number of legacy configurations N3 may be divided into two numbers, e.g., N3/2 and N3/2, to be counted towards N4 and N5, or N3 may be counted only towards one of N4 and N5, which is equivalent to dividing N3 into two number of N3 and 0.

According to another embodiment, for the interpretation of each value reported in FG42-1, 42-1a, 42-1b, 42-2, 42-2a, and 42-2b for the total number of simultaneous NZP-CSI-RS resources (components 4-7), the following alternatives (All1, Alt2, and Alt3) may be utilized.

Alt1): Values in FG42-1, 42-1a, 42-1b, 42-2, 42-2a, and 42-2b provide the total limit of CSI-RS resources associated with legacy reporting settings together with CSI-RS resources associated with a specific reporting type and adaptation method of Rel-18 reporting settings. Therefore, components 4-7 may be modified accordingly, e.g., FG42-1 may be modified as shown below in Table 7. In Table 7, the bolded and underlined text illustrates the updated text.

**Table 7**

| |
|---|
| Supported max # simultaneous NZP-CSI-RS resources **associated with periodic reporting without sub-configurations or with sub-configurations for spatial domain adaptation** per CC |
| Supported max total # of CSI-RS ports in simultaneous NZP-CSI-RS resources **associated with periodic reporting without sub-configurations or with sub-configurations for spatial domain adaptation** per CC |
| Supported max # simultaneous NZP-CSI-RS resources **associated with periodic reporting without sub-configurations or with sub-configurations for spatial domain adaptation** in active BWPs across all CCs |
| Supported max total # of CSI-RS ports in simultaneous NZP-CSI-RS resources **associated with periodic reporting without sub-configurations or with sub-configurations for spatial domain adaptation** in active BWPs across all CCs |

Alt2): Values in FG42-1, 42-1a, 42-1b, 42-2, 42-2a, and 42-2b provide the total limit of CSI-RS resources associated with the specific reporting type and adaptation method of Rel-18 reporting settings. Therefore, components 4-7 may be modified accordingly, e.g., FG42-1 may be modified as shown below in Table 8. In Table 8, the bolded and underlined text illustrates the updated text.

**Table 8**

| |
|---|
| Supported max # simultaneous NZP-CSI-RS resources **associated with periodic reporting with sub-configurations for spatial domain adaptation** per CC |
| Supported max total # of CSI-RS ports in simultaneous NZP-CSI-RS resources **associated with periodic reporting with sub-configurations for spatial domain adaptation** per CC |
| Supported max # simultaneous NZP-CSI-RS resources **associated with periodic reporting with sub-configurations for spatial domain adaptation** in active BWPs across all CCs |
| Supported max total # of CSI-RS ports in simultaneous NZP-CSI-RS resources **associated with periodic reporting with sub-configurations for spatial domain adaptation** in active BWPs across all CCs |

Values in FG2-33 additionally provide the total limit of CSI-RS resources associated with legacy reporting settings. Accordingly, a note may be added in FG42-1, 42-1a, 42-1b, 42-2, 42-2a, and 42-2b that 'For components 4-7, values in FG2-33 provide the total limit of CSI-RS resources associated with reporting setting without sub-configurations'.

Alt3): Values in FG42-1, 42-1a, 42-1b, 42-2, 42-2a, and 42-2b provide the total limit of CSI-RS resources associated with legacy reporting settings together with CSI-RS resources associated with Rel-18 reporting settings across all reporting types and adaptation methods the UE supports, and the UE shall declare the same value in FG42-1, 42-1a, 42-1b, 42-2, 42-2a, and 42-2b. Corresponding notes may be added to FG42-1, 42-1a, 42-1b, 42-2, 42-2a, and 42-2b.

In Alt1 and Alt2 above, a CSI-RS associated with joint spatial and power domain adaptation is not considered. Accordingly, another thing to consider is when spatial and power domain adaptation is jointly configured. According to an embodiment, one method is to create a new component corresponding to such joint operation such that the UE can separately report the supported total number for joint operation only. In such a case, a component would look like Table 9 or 10 below.

**Table 9**

| |
|---|
| Supported max # simultaneous NZP-CSI-RS resources **associated with periodic reporting without sub-configurations or with sub-configurations for joint spatial and power domain adaptation** per CC |
| Supported max total # of CSI-RS ports in simultaneous NZP-CSI-RS resources **associated with periodic reporting without sub-configurations or with sub-configurations for joint spatial and power domain adaptation** per CC |
| Supported max # simultaneous NZP-CSI-RS resources **associated with periodic reporting without sub-configurations or with sub-configurations for joint spatial and power domain adaptation** in active BWPs across all CCs |
| Supported max total # of CSI-RS ports in simultaneous NZP-CSI-RS resources **associated with periodic reporting without sub-configurations or with sub-configurations for joint** spatial **and power domain adaptation** in active BWPs across all CCs |

**Table 10**

| |
|---|
| Supported max # simultaneous NZP-CSI-RS resources **associated with periodic reporting with sub-configurations for joint spatial and power domain adaptation** per CC |
| Supported max total # of CSI-RS ports in simultaneous NZP-CSI-RS resources **associated with periodic reporting with sub-configurations for joint spatial and power domain adaptation** per CC |
| Supported max # simultaneous NZP-CSI-RS resources **associated with periodic reporting with sub-configurations for joint spatial and power domain adaptation** in active BWPs across all CCs |
| Supported max total # of CSI-RS ports in simultaneous NZP-CSI-RS resources **associated with periodic reporting with sub-configurations for joint spatial and power domain adaptation** in active BWPs across all CCs |

According to another embodiment, a new component is not created and existing total values may be re-used, as shown in Table 11 below.

For example, if N1 = the number of CSI-RS resources associated with spatial domain adaptation periodic reporting, N2 = the number of CSI-RS resources associated with power domain adaptation periodic reporting, N3 = the number of CSI-RS resources associated with legacy periodic reporting, and N6 = the number of CSI-RS resources associated with joint spatial and power domain adaptation periodic reporting, considering the UE signals N4 in FG42-1 and N5 in FG42-2, then the interpretation would be that N1, N2, and N3 should satisfy N1+N3+N6<=N4, and N2+N3+N6<=N5.

**Table 11**

| |
|---|
| Supported max # simultaneous NZP-CSI-RS resources **associated with periodic reporting without sub-configurations or with sub-configurations for spatial domain or joint spatial and power domain adaptation** per CC |
| Supported max total # of CSI-RS ports in simultaneous NZP-CSI-RS resources **associated with periodic reporting without sub-configurations or with sub-configurations for spatial domain or joint spatial and power domain adaptation** per CC |
| Supported max # simultaneous NZP-CSI-RS resources **associated with periodic reporting without sub-configurations or with sub-configurations for spatial domain or joint spatial and power domain adaptation** in active BWPs across all CCs |
| Supported max total # of CSI-RS ports in simultaneous NZP-CSI-RS resources **associated with periodic reporting without sub-configurations or with sub-configurations for spatial domain or joint spatial and power domain adaptation** in active BWPs across all CCs |

In the above approach, the number of joint configurations is counted twice towards both N4 and N5, but this can be inefficient. Accordingly, as an alternative, the number of joint configurations N6 may be divided into two numbers, e.g., N6/2 and N6/2, to be counted towards N4 and N5, or N6 may be counted only towards one of N4 and N5, which is equivalent to dividing N6 into two number of N6 and 0.

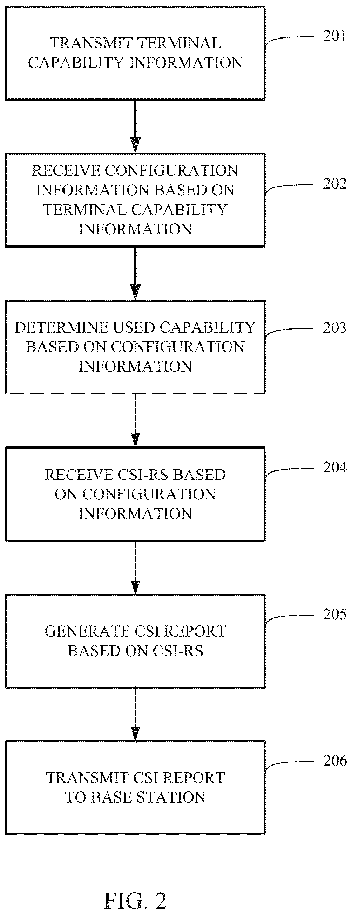

FIG. 2 is a flow chart illustrating a method performed by a terminal according to an embodiment.

Referring to FIG. 2, in step 201, the terminal, e.g., a UE, transmits, to a base station, terminal capability information indicating terminal support of a first capability and a second capability. For example, the first capability may be a 3GPP Rel-15 capability and the second capability may be a 3GPP Rel-18 capability.

In step 202, the terminal receives, from the base station, configuration information based on the terminal capability information. The configuration information may include a CSI report configuration.

In step 203, the terminal determines a used capability among the first capability and the second capability, based on a characteristic of the CSI report configuration.

In step 204, the terminal receives a CSI-RS based on the configuration information.

In step 205, the terminal generates a CSI report in accordance with the used capability based on the received CSI-RS.

In step 206, the terminal transmits the CSI report to the base station.

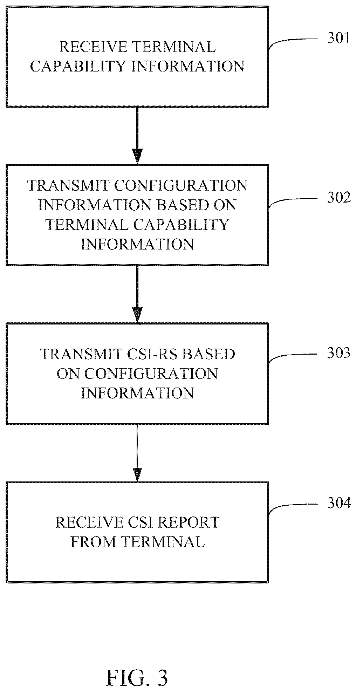

FIG. 3 is a flow chart illustrating a method performed by a base station according to an embodiment.

Referring to FIG. 3, in step 301, the base station, e.g., a gNB, receives, from a terminal, terminal capability information indicating terminal support of a first capability and a second capability. For example, the first capability may be a 3GPP Rel-15 capability and the second capability may be a 3GPP Rel-18 capability.

In step 302, the base station transmits, to the terminal, configuration information based on the terminal capability information. The configuration information may include a CSI report configuration. Additionally, a characteristic of the CSI report configuration is used by the terminal to identify a used capability among the first capability and the second capability.

In step 303, the base station transmits a CSI-RS based on the configuration information.

In step 304, the base station receives, from the terminal, a CSI report generated in accordance with the used capability based on the transmitted CSI-RS.

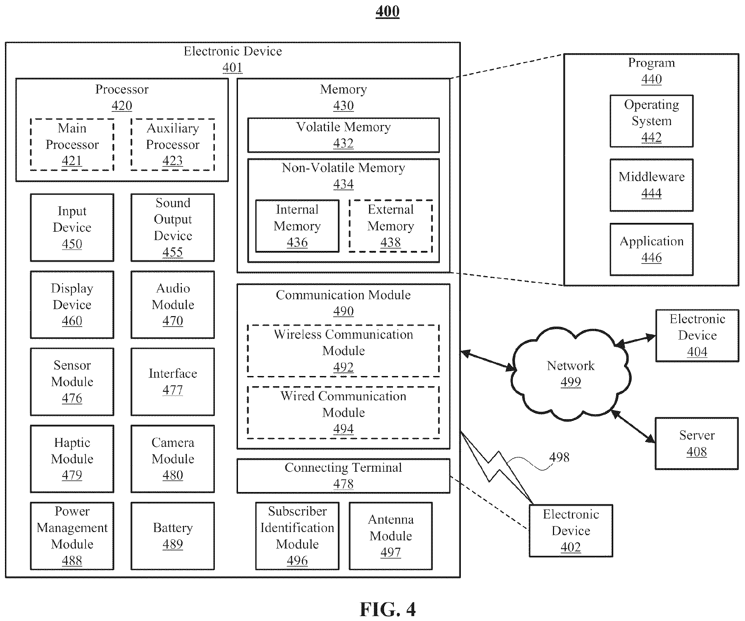

FIG. 4 is a block diagram of an electronic device in a network environment 800, according to an embodiment.

Referring to FIG. 4, an electronic device 401, e.g., a UE as illustrated in FIG. 2, in a network environment 400 may communicate with an electronic device 402 via a first network 498 (e.g., a short-range wireless communication network), or an electronic device 404 or a server 408 via a second network 499 (e.g., a long-range wireless communication network). The electronic device 401 may communicate with the electronic device 404 via the server 408. The electronic device 401 may include a processor 420, a memory 430, an input device 450, a sound output device 455, a display device 460, an audio module 470, a sensor module 476, an interface 477, a haptic module 479, a camera module 480, a power management module 488, a battery 489, a communication module 490, a subscriber identification module (SIM) card 496, or an antenna module 497. In one embodiment, at least one (e.g., the display device 460 or the camera module 480) of the components may be omitted from the electronic device 401, or one or more other components may be added to the electronic device 401. Some of the components may be implemented as a single integrated circuit (IC). For example, the sensor module 476 (e.g., a fingerprint sensor, an iris sensor, or an illuminance sensor) may be embedded in the display device 460 (e.g., a display).

The processor 420 may execute software (e.g., a program 440) to control at least one other component (e.g., a hardware or a software component) of the electronic device 401 coupled with the processor 420 and may perform various data processing or computations, e.g., as illustrated in FIG. 2.

As at least part of the data processing or computations, the processor 420 may load a command or data received from another component (e.g., the sensor module 476 or the communication module 490) in volatile memory 432, process the command or the data stored in the volatile memory 432, and store resulting data in non-volatile memory 434. The processor 420 may include a main processor 421 (e.g., a central processing unit (CPU) or an application processor (AP)), and an auxiliary processor 423 (e.g., a graphics processing unit (GPU), an image signal processor (ISP), a sensor hub processor, or a communication processor (CP)) that is operable independently from, or in conjunction with, the main processor 421. Additionally or alternatively, the auxiliary processor 423 may be adapted to consume less power than the main processor 421, or execute a particular function. The auxiliary processor 423 may be implemented as being separate from, or a part of, the main processor 421.

The auxiliary processor 423 may control at least some of the functions or states related to at least one component (e.g., the display device 460, the sensor module 476, or the communication module 490) among the components of the electronic device 401, instead of the main processor 421 while the main processor 421 is in an inactive (e.g., sleep) state, or together with the main processor 421 while the main processor 421 is in an active state (e.g., executing an application). The auxiliary processor 423 (e.g., an image signal processor or a communication processor) may be implemented as part of another component (e.g., the camera module 480 or the communication module 490) functionally related to the auxiliary processor 423.

The memory 430 may store various data used by at least one component (e.g., the processor 420 or the sensor module 476) of the electronic device 401. The various data may include, for example, software (e.g., the program 440) and input data or output data for a command related thereto. The memory 430 may include the volatile memory 432 or the non-volatile memory 434. Non-volatile memory 434 may include internal memory 436 and/or external memory 438.

The program 440 may be stored in the memory 430 as software, and may include, for example, an operating system (OS) 442, middleware 444, or an application 446.

The input device 450 may receive a command or data to be used by another component (e.g., the processor 420) of the electronic device 401, from the outside (e.g., a user) of the electronic device 401. The input device 450 may include, for example, a microphone, a mouse, or a keyboard.

The sound output device 455 may output sound signals to the outside of the electronic device 401. The sound output device 455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 460 may visually provide information to the outside (e.g., a user) of the electronic device 401. The display device 460 may include, for example, a display, a hologram device, or a projector and control circuitry to control a corresponding one of the display, hologram device, and projector. The display device 460 may include touch circuitry adapted to detect a touch, or sensor circuitry (e.g., a pressure sensor) adapted to measure the intensity of force incurred by the touch.

The audio module 470 may convert a sound into an electrical signal and vice versa. The audio module 470 may obtain the sound via the input device 450 or output the sound via the sound output device 455 or a headphone of an external electronic device 402 directly (e.g., wired) or wirelessly coupled with the electronic device 401.

The sensor module 476 may detect an operational state (e.g., power or temperature) of the electronic device 401 or an environmental state (e.g., a state of a user) external to the electronic device 401, and then generate an electrical signal or data value corresponding to the detected state. The sensor module 476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 477 may support one or more specified protocols to be used for the electronic device 401 to be coupled with the external electronic device 402 directly (e.g., wired) or wirelessly. The interface 477 may include, for example, a high- definition multimedia interface (HDMI), a universal serial bus (USB) interface, a secure digital (SD) card interface, or an audio interface.

A connecting terminal 478 may include a connector via which the electronic device 401 may be physically connected with the external electronic device 402. The connecting terminal 478 may include, for example, an HDMI connector, a USB connector, an SD card connector, or an audio connector (e.g., a headphone connector).

The haptic module 479 may convert an electrical signal into a mechanical stimulus (e.g., a vibration or a movement) or an electrical stimulus which may be recognized by a user via tactile sensation or kinesthetic sensation. The haptic module 479 may include, for example, a motor, a piezoelectric element, or an electrical stimulator.

The camera module 480 may capture a still image or moving images. The camera module 480 may include one or more lenses, image sensors, image signal processors, or flashes. The power management module 488 may manage power supplied to the electronic device 401. The power management module 488 may be implemented as at least part of, for example, a power management integrated circuit (PMIC).

The battery 489 may supply power to at least one component of the electronic device 401. The battery 489 may include, for example, a primary cell which is not rechargeable, a secondary cell which is rechargeable, or a fuel cell.

The communication module 490 may support establishing a direct (e.g., wired) communication channel or a wireless communication channel between the electronic device 401 and the external electronic device (e.g., the electronic device 402, the electronic device 404, or the server 408) and performing communication via the established communication channel. The communication module 490 may include one or more communication processors that are operable independently from the processor 420 (e.g., the AP) and supports a direct (e.g., wired) communication or a wireless communication. The communication module 490 may include a wireless communication module 492 (e.g., a cellular communication module, a short-range wireless communication module, or a global navigation satellite system (GNSS) communication module) or a wired communication module 494 (e.g., a local area network (LAN) communication module or a power line communication (PLC) module). A corresponding one of these communication modules may communicate with the external electronic device via the first network 498 (e.g., a short-range communication network, such as BLUETOOTH^{™}, wireless-fidelity (Wi-Fi) direct, or a standard of the Infrared Data Association (IrDA)) or the second network 499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 492 may identify and authenticate the electronic device 401 in a communication network, such as the first network 498 or the second network 499, using subscriber information (e.g., international mobile subscriber identity (IMSI)) stored in the subscriber identification module 496.

The antenna module 497 may transmit or receive a signal or power to or from the outside (e.g., the external electronic device) of the electronic device 401. The antenna module 497 may include one or more antennas, and, therefrom, at least one antenna appropriate for a communication scheme used in the communication network, such as the first network 498 or the second network 499, may be selected, for example, by the communication module 490 (e.g., the wireless communication module 492). The signal or the power may then be transmitted or received between the communication module 490 and the external electronic device via the selected at least one antenna.

Commands or data may be transmitted or received between the electronic device 401 and the external electronic device 404 via the server 408 coupled with the second network 499. Each of the electronic devices 402 and 404 may be a device of a same type as, or a different type, from the electronic device 401. All or some of operations to be executed at the electronic device 401 may be executed at one or more of the external electronic devices 402, 404, or 408. For example, if the electronic device 401 should perform a function or a service automatically, or in response to a request from a user or another device, the electronic device 401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 401. The electronic device 401 may provide the outcome, with or without further processing of the outcome, as at least part of a reply to the request. To that end, a cloud computing, distributed computing, or client-server computing technology may be used, for example.

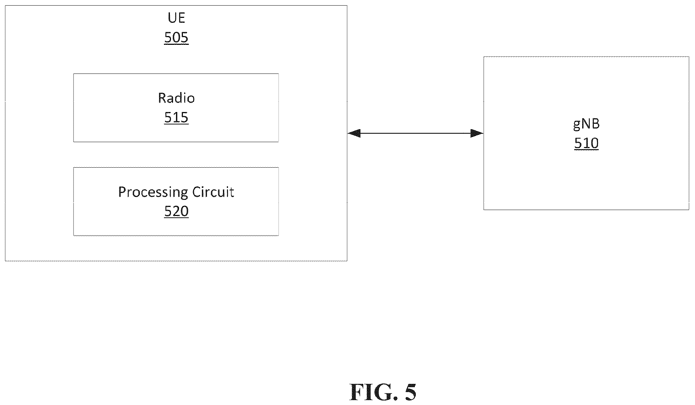

FIG. 5 shows a system including a UE 505 and a gNB 510, in communication with each other. The UE may include a radio 515 and a processing circuit (or a means for processing) 520, which may perform various methods disclosed herein, e.g., the method illustrated in FIG. 2. For example, the processing circuit 520 may receive, via the radio 515, transmissions from the network node (gNB) 510, and the processing circuit 520 may transmit, via the radio 515, signals to the gNB 510.

Although embodiments of the present disclosure have been described above with reference to 3GPP Rel-15 and Rel-18, the disclosure is not limited thereto, and may be similarly applicable to other communication standards having similar version characteristics.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A method performed by a terminal (505) in a wireless communication system, the method comprising:
transmitting (201), to a base station, terminal capability information indicating terminal support of a first capability and a second capability;
receiving (202), from the base station, configuration information based on the terminal capability information, the configuration information including a channel state information, CSI, report configuration;
determining (203) a used capability among the first capability and the second capability, based on a characteristic of the CSI report configuration;
receiving (204) a CSI reference signal, CSI-RS, based on the configuration information;
generating (205) a CSI report in accordance with the used capability based on the received CSI-RS; and
transmitting (206) the CSI report to the base station.

2. The method of claim 1, wherein determining the used capability among the first capability and the second capability comprises determining the second capability as the used capability for a bandwidth part, BWP, in response to the CSI report configuration including a CSI report setting with a sub-configuration.

3. The method of claim 1 or 2, wherein determining the used capability among the first capability and the second capability comprises determining the second capability as the used capability in response to the CSI report configuration in an active bandwidth part, BWP, of any component carrier, CC, including a CSI report setting with a sub-configuration.

4. The method of any one of claims 1 to 3, further comprising counting non-zero power, NZP,-CSI-RS resources and CSI-RS ports for the CSI reporting settings with and without sub-configurations towards the second capability.

5. The method of any one of claims 1 to 4, further comprising determining a supported maximum number of simultaneous non-zero power, NZP,-CSI-RS resources or a supported maximum number of total CSI-RS ports in simultaneous NZP-CSI-RS resources based on a minimum of reported values for both type 1 and type 2 spatial domain adaptation, in response to the configuration information including CSI report settings with sub-configurations corresponding to both the type 1 and type 2 spatial domain adaptation.

6. A terminal (505) for use in a wireless communication system, the terminal (505) comprising:
a transceiver (515); and
a processor (520) configured to:
transmit (201), to a base station, via the transceiver (515), terminal capability information indicating terminal support of a first capability and a second capability,
receive (202), from the base station, via the transceiver (515), configuration information based on the terminal capability information, the configuration information including a channel state information, CSI, report configuration,
determine (203) a used capability among the first capability and the second capability, based on a characteristic of the CSI report configuration,
receive (204), via the transceiver (515), a CSI reference signal, CSI-RS, based on the configuration information,
generate (205) a CSI report in accordance with the used capability based on the received CSI-RS, and
transmit (206), via the transceiver (515), the CSI report to the base station.

7. The terminal (505) of claim 6, wherein the processor (520) is further configured to determine the used capability among the first capability and the second signaling capability by determining the second capability as the used capability for a bandwidth part, BWP, in response to the CSI report configuration including a CSI report setting with a sub-configuration.

8. The terminal (505) of claim 6 or 7, wherein the processor (520) is further configured to determine the used capability among the first capability and the second capability by determining the second capability as the used capability in response to the CSI report configuration in an active bandwidth part, BWP, of any component carrier, CC, including a CSI report setting with a sub-configuration.

9. The terminal (505) of any one of claims 6 to 8, wherein the processor (520) is further configured to count non-zero power, NZP,-CSI-RS resources and CSI-RS ports for the CSI reporting settings with and without sub-configurations towards the second capability.

10. The terminal (505) of any one of claims 6 to 9, wherein the processor (520) is further configured to determine a supported maximum number of simultaneous non-zero power, NZP,-CSI-RS resources or a supported maximum number of total CSI-RS ports in simultaneous NZP-CSI-RS resources based on a minimum of reported values for both type 1 and type 2 spatial domain adaptation, in response to the configuration information including CSI report settings with sub-configurations corresponding to both the type 1 and the type 2 spatial domain adaptation.

11. A method performed by a base station in a wireless communication system, the method comprising:
receiving (301), from a terminal (505), terminal capability information indicating terminal support of a first capability and a second capability;
transmitting (302), to the terminal (505), configuration information based on the terminal capability information, wherein the configuration information includes a channel state information, CSI, report configuration, and wherein a characteristic of the CSI report configuration is used by the terminal (505) to identify a used capability among the first capability and the second capability;
transmitting (303) a CSI reference signal, CSI-RS, based on the configuration information; and
receiving (304), from the terminal (505), a CSI report generated in accordance with the used capability based on the transmitted CSI-RS.

12. A base station for use in a wireless communication system, the base station comprising:
a transceiver; and
a processor configured to:
receive (301), from a terminal (505), via the transceiver, terminal capability information indicating terminal support of a first capability and a second capability,
transmit (302), to the terminal (505), via the transceiver, configuration information based on the terminal capability information, wherein the configuration information includes a channel state information, CSI, report configuration, and wherein a characteristic of the CSI report configuration is used by the terminal (505) to identify a used capability among the first capability and the second capability,
transmit (303), via the transceiver, a CSI reference signal, CSI-RS, based on the configuration information, and
receive (304), from the terminal (505), via the transceiver, a CSI report generated in accordance with the used capability based on the transmitted CSI-RS.

13. The method of any one of claims 1 to 5 and 11, or the terminal of any one of claims 6 to 10, or the base station of claim 12, wherein the first capability includes 3^{rd} generation partnership project, 3GPP, Rel-15 capability and the second capability includes 3GPP Rel-18 capability.

14. The method of any one of claims 1 to 5 and 11, or the terminal of any one of claims 6 to 10, or the base station of claim 12 or 13, wherein the used capability is for a supported total number of CSI reporting settings, a supported maximum number of simultaneous non-zero power, NZP,-CSI-RS resources, or a supported maximum number of total CSI-RS ports in simultaneous NZP-CSI-RS resources.
